# DEMANDE DE BREVET EUROPEEN

(11) **EP 4 102 840 A1**
(43) Date de publication de la demande: **14.12.2022**
(21) Numéro de dépôt: 22187267.4
(22) Date de dépôt: 16.06.2016
(51) Int. Cl.: H04N 19/61, H04N 19/12, H04N 19/14, H04N 19/18, H04N 19/463

(54) **PROCÉDÉ DE DÉCODAGE D'UNE IMAGE NUMÉRIQUE, DISPOSITIF ET PROGRAMME D'ORDINATEUR ASSOCIÉ**

(30) Priorité: 29.06.2015 FR 1556016
(62) Demande divisionnaire de: 16741084.4
(71) Demandeur: Fondation B Com, 35510 Cesson Sevigne (FR)
(72) Inventeur: PHILIPPE, Pierrick, 35520 MELESSE (FR)
(74) Mandataire: Jacobacci Coralis Harle

(57) **Abrégé**

L'invention concerne un procédé de codage d'une image numérique, ladite image (Iₖ) étant divisée en une pluralité de blocs de pixels traités dans un ordre défini, ledit procédé comprenant les étapes suivantes, mises en œuvre pour un bloc courant, de dimensions prédéterminées :
- Prédiction (T1) des valeurs du bloc courant à partir d'au moins un bloc précédemment traité selon un mode de prédiction choisi parmi une pluralité de modes prédéterminés,
- Calcul (T2) d'un bloc résidu (R) par soustraction des valeurs prédites aux valeurs originales du bloc courant,
- Obtention (T3) d'un bloc résidu (RT) transformé par application d'une transformée à des pixels du bloc résidu, ledit bloc résidu transformé comprenant des coefficients, la transformée appartenant à une liste prédéterminée de transformées;

Codage (T9) du bloc résidu transformé ; Selon l'invention, le procédé comprend une étape (T6) de calcul d'au moins une caractéristique représentative d'au moins un coefficient résidu transformé du bloc courant, une étape (T7) de détermination d'une donnée initiale d'identification représentative d'une sous-liste d'au moins une transformée associée à ladite au moins une caractéristique calculée et une vérification d'une appartenance de la transformée appliquée à la sous-liste identifiée par la donnée initiale.

## Description

### 1. Domaine de l'invention

Le domaine de l'invention est celui de la compression de signal, en particulier d'une image numérique ou d'une séquence d'images numériques, divisée en blocs de pixels.

L'invention concerne plus particulièrement la signalisation d'une transformée appliquée à un bloc de pixels, dans un contexte de compétition de transformées.

Le codage/décodage d'images numériques s'applique notamment à des images issues d'au moins une séquence vidéo comprenant :
- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D), - etc.

La présente invention s'applique de manière similaire au codage/décodage d'images de type 2D ou 3D.

L'invention peut notamment, mais non exclusivement, s'appliquer au codage vidéo mis en œuvre dans les codeurs vidéo actuels AVC (pour « Advanced Video Coding », en anglais) et HEVC (pour « High Efficiency Video Coding », en anglais) et leurs extensions (MVC, 3D-AVC, MV-HEVC, 3D-HEVC, etc), et au décodage correspondant.

### 2. Présentation de l'art antérieur

On considère un schéma de compression classique d'une image numérique, selon lequel l'image est divisée en blocs de pixels. Un bloc courant à coder, qui constitue une unité de codage initiale, est généralement découpé en un nombre variable de sous-blocs selon un mode de découpage prédéterminé.

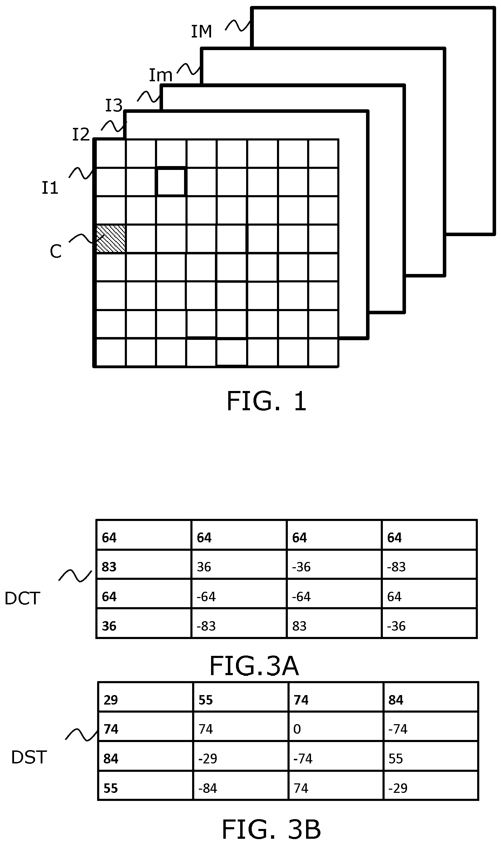

En relation avec la Figure **1****,** on considère une séquence d'images numériques I₁, I₂, Iₖ, avec K entier non nul. Une image Iₖ est découpée en unités de codage initiales ou CTU (pour « Coding Tree Unit » en anglais) selon la terminologie de la norme HEVC, telle que spécifiée dans le document "ISO/IEC 23008-2:2013 - High efficiency coding and média delivery in heterogeneous environments -- Part 2: High efficiency video coding », International Organization for Standardization, publié en novembre 2013. Les codeurs standards proposent généralement un partitionnement régulier, qui s'appuie sur des blocs carrés ou rectangulaires, appelés CU (pour « Coding Units », en anglais) de taille fixe. Le partitionnement se fait toujours à partir de l'unité de codage initiale, non partitionnée, et le partitionnement final est calculé puis signalé à partir de cette base neutre.

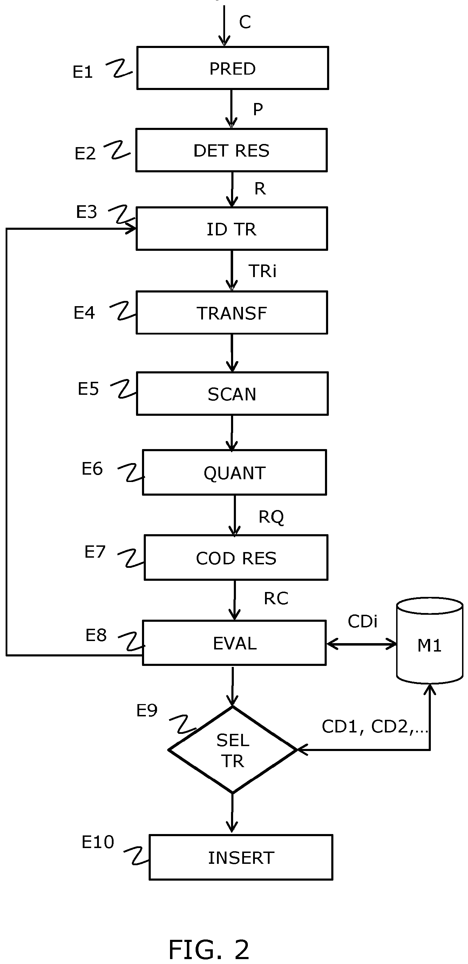

Chaque CU subit une opération d'encodage ou de décodage consistant en une suite d'opérations, comprenant de manière non exhaustive une prédiction, un calcul de résidu, une transformation, une quantification et un codage entropique. Cette suite d'opérations est connue de l'art antérieur et présentée en relation avec la Figure **2****.**

On sélectionne comme bloc courant c le premier bloc CTU à traiter. Par exemple, il s'agit du premier bloc (dans l'ordre lexicographique). Ce bloc comporte NxN pixels, avec N entier non nul, par exemple égal à 64 selon la norme HEVC.

Au cours d'une étape E1, on détermine une prédiction Pr du bloc original b. Il s'agit d'un bloc de prédiction construit par des moyens connus, typiquement par compensation de mouvement (bloc issu d'une image de référence précédemment décodée), ou par prédiction intra (bloc construit à partir des pixels décodés appartenant à l'image ID). Les informations de prédiction liées à Pr sont codées dans le train binaire TB ou fichier compressé FC. On suppose ici qu'il y a P modes de prédiction possibles m₁, m₂,..., mₚ, avec P entier non nul. Par exemple, le mode de prédiction choisi pour le bloc courant c est le mode mₚ. Certains modes de prédiction sont associés à une prédiction de type Intra, d'autres à une prédiction de type INTER.

Au cours d'une étape E2, un résidu original R est formé, par soustraction R = c-Pr de la prédiction Pr du bloc courant c au bloc courant c.

En E3, on identifie une transformée à appliquer au résidu R obtenu.

L'étape de transformation joue un rôle crucial dans un tel schéma de codage vidéo : en effet c'est elle qui concentre l'information avant l'opération de quantification. Il en résulte qu'un ensemble de pixels résiduel avant encodage se voit représenté sur un faible nombre de coefficients fréquentiels non-nuls représentant la même information. Ainsi, au lieu de transmettre un grand nombre de coefficients, seul un petit nombre sera nécessaire pour reconstituer avec fidélité un bloc de pixels.

En codage d'image et vidéo, on utilise généralement des transformées blocs (4x4, 8x8 etc), orthogonales ou quasi-orthogonales. Les transformées les plus employées sont à base de bases cosinus. La DCT est ainsi présente dans la plupart des standards pour l'image et la vidéo. Récemment la norme HEVC a également introduit la DST (pour « Discrète Sine Transform », en anglais) pour le codage de résidus particuliers dans le cas de blocs de taille 4x4.

Dans les faits, ce sont des approximations de ces transformées qui sont employées, les calculs étant effectués sur des entiers. En général, les bases de transformées sont approximées à l'entier le plus proche, sur une précision donnée (généralement de 8 bits).

A titre d'exemple on présente en relation avec les Figures **3A** et **3B****,** les transformées utilisées par la norme HEVC sur les blocs de taille 4x4 : Il s'agit des transformées DCT et DST. Les valeurs présentées dans ce tableau sont à diviser par 128 pour retrouver les transformations quasi-orthonormales.

Plus récemment la notion de compétition de transformées a été introduite. Pour une taille de bloc et un mode de prédiction donnés, l'encodeur a le choix entre T transformées, avec T entier non nul, généralement supérieur ou égal à 2. De la même manière que pour le partitionnement d'un bloc, il les applique chacune à leur tour au bloc courant, puis les évalue selon un critère débit-distorsion. La transformée choisie est celle qui obtient les meilleures performances :
La norme HEVC prévoit, pour les blocs 4x4, le choix entre une transformation de type DST ou une absence de transformée « Transform Skip » (c'est-à-dire que les coefficients résiduels ne subissent pas de transformée).

Dans la publication de A. Arrufat et al, intitulée « Rate-distortion optimised transform competition for intra coding in HEVC », publiée dans les Proceedings de la conférence IEEE Visual Communication on Image Processing, en décembre 2014, qui s'est tenue à La Valette, Malta. pp.73, l'encodeur a le choix entre de multiples transformées. Par exemple, il est proposé 5 transformées pour les blocs de taille 4x4 et 17 transformées pour les blocs de taille 8x8. L'étape E3 identifie donc une transformées parmi celles disponibles en fonction de la taille du bloc courant.

Au cours d'une étape E4, le résidu R est transformé en un bloc résidu transformé, appelé RT, par la transformée identifiée. Il s'agit par exemple d'une transformée de type block (communément DCT voire DST voire des transformations adaptées) ou d'une transformée en ondelettes, toutes connues de l'homme de métier et notamment mises en œuvre dans les normes JPEG/MPEG pour la DCT/DST et JPEG2000 pour la transformée en ondelettes.

En E5, de façon connue dans l'état de l'art, ces coefficients sont scannés dans un ordre prédéterminés de façon à constituer un vecteur monodimensionnel RQ[j], où l'indice j varie de 0 à Nb-1, avec Nb entier égal au nombre de pixels du bloc c. L'indice j est appelé fréquence du coefficient RQ[j]. Classiquement, on scanne ces coefficients par ordre globalement croissant ou décroissant de valeurs de fréquence, par exemple selon un parcours en zigzag, qui est connu de la norme de codage d'image fixes JPEG.

En E6, le résidu transformé RT est quantifié par des moyens classiques de quantification, par exemple scalaire ou vectorielle, en un bloc résidu quantifié RQ comprenant autant de coefficients que le bloc résidu RQ contient de pixels, par exemple Nb, avec Nb entier non nul.

Lors d'une étape E7, on vient coder les informations relatives aux coefficients du bloc résidu RQ par codage entropique, par exemple selon une technique de codage de Huffman ou de codage arithmétique. Ces informations comprennent au moins l'amplitude des coefficients, leur signe et une signalisation de la transformée appliquée au bloc par l'encodeur. Par amplitude, on entend ici la valeur absolue du coefficient. Classiquement, on peut coder pour chaque coefficient une information représentative du fait que le coefficient est non nul. Ensuite, pour chaque coefficient non nul, une ou plusieurs informations relatives à l'amplitude sont codées. On obtient les amplitudes codées CA. On code aussi les signes des coefficients non nuls. En général, ils sont simplement codés par un bit 0 ou 1, chaque valeur correspondant à une polarité donnée. Un tel codage obtient des performances efficaces, car, du fait de la transformation, les valeurs des amplitudes à coder sont en grande majorité nulles.

Concernant la transformée appliquée, dans le cas de la norme HEVC, on indique au décodeur par un bit, appelé transform_skip_flag, la transformée inverse à appliquer parmi les deux alternatives DST ou absence de transformée.

Dans le cas de la publication de A. Arrufat et al, on la signale au décodeur par une approche indicateur plus signalisation explicite : l'encodeur signale par un indicateur (indicateur en position 0) si la transformée est une transformée de type HEVC (selon la taille, il s'agit d'une DCT ou d'une DST) ou une transformation particulière (indicateur en position 1). Si l'indicateur indique une transformation particulière, l'indice de la transformation particulière utilisée est signalé au décodeur sur un code de longueur fixe (2 pour les blocs 4x4 et 4 pour les blocs 8x8 afin de signaler respectivement les 4 et 16 transformations particulières possibles).

Grâce à l'augmentation du nombre de transformées, la performance de codage est améliorée, car chaque transformée est adaptée à la statistique d'un type de signal résiduel donné. Des gains sur les signaux de type texte et graphique sont rapportés par la technique « transform skip » et sur des signaux de nature quelconque (images contenant des textes, graphiques synthétiques, ou représentant des scènes filmées naturelles) par la technique présentée dans la publication A. Arrufat.

En E8, l'encodeur évalue la transformée appliquée, sous contrôle d'un critère débit distorsion, à partir du résidu encodé.

On répète les étapes précédentes E1 à E8 appliquées au bloc courant c pour les T transformée disponibles à l'encodeur.

En E9, une fois que toutes les transformées disponibles ont été appliquées, elles sont mises en compétition selon un critère débit-distorsion et la transformée qui obtient le meilleur résultat selon ce critère est finalement retenue.

En E10, les données codées relatives au bloc courant sont insérées dans le train binaire TB.

Les autres blocs de l'image I1 sont traités de la même façon, de même pour les images suivantes de la séquence.

### 3. Inconvénients de l'art antérieur

Les inconvénients de l'art antérieur sont les suivants :
- la multiplication du nombre de transformées induit une signalisation accrue pour indiquer la transformée choisie par l'encodeur au décodeur.
- ce coût accru en signalisation, qui est pris en compte lors de la compétition entre transformées, impacte les performances de compression.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui améliore les performances de compression d'un codeur d'images numériques, en réduisant le volume de données transmises, sans requérir d'augmentation significative des ressources de calcul et de mémoire.

### 5. Exposé de l'invention

Ces objectifs, ainsi que d'autres qui apparaîtront par la suite, sont atteints à l'aide d'un procédé de codage d'une image numérique, ladite image étant divisée en une pluralité de blocs de pixels traités dans un ordre défini, ledit procédé comprenant les étapes suivantes, mises en oeuvre pour un bloc courant, de dimensions prédéterminées :
- Prédiction des valeurs du bloc courant à partir d'au moins un bloc précédemment traité selon un mode de prédiction choisi parmi une pluralité de modes prédéterminés,
- Calcul d'un bloc résidu par soustraction des valeurs prédites aux valeurs originales du bloc courant,
- Obtention d'un bloc résidu transformé par application d'une transformée à des pixels du bloc résidu, ledit bloc résidu transformé comprenant des coefficients, la transformée appartenant à une liste prédéterminée de transformées; et
- Codage du bloc résidu transformé .

Selon l'invention, le procédé comprend une étape de calcul d'au moins une caractéristique représentative d'au moins un coefficient résidu transformé du bloc courant et une étape de détermination d'une donnée initiale d'identification représentative d'une sous-liste d'au moins une transformée associée à ladite au moins une caractéristique calculée.

Avec l'invention, on détermine à l'encodeur une sous-liste de transformées probables pour le bloc courant, à partir d'au moins une caractéristique du signal résiduel transformé. Une telle sous-liste constitue un sous-ensemble de la liste de transformées disponibles à l'encodeur, et présente un nombre d'éléments inférieur à celui de cette liste.

L'inventeur a en effet constaté une relation entre les valeurs de certaines caractéristiques du signal résiduel transformé du bloc courant et la transformée qui a été appliquée à ce bloc. Autrement dit, le signal résiduel du bloc porte une information sur la transformée qui lui a été appliquée. L'inventeur a donc établi la possibilité d'identifier une ou plusieurs transformées présentant une forte probabilité d'être sélectionnées par l'encodeur pour le traitement de ce bloc, à partir d'une ou plusieurs caractéristiques du signal résiduel.

Cette détermination s'appuie sur des valeurs qu'un décodeur extrait du train binaire. Par exemple, il s'agit des valeurs des coefficients transformés que l'encodeur a codées et insérées dans le train binaire. Elles peuvent avoir subi ou non une étape de quantification. On fait l'hypothèse que le décodeur dispose des moyens de reproduire le calcul de la ou des caractéristiques du signal résiduel à partir des données qu'il lit dans le train binaires et la détermination de la donnée initiale représentative de la sous-liste de transformées, de façon analogue à celle de l'encodeur.

On comprend que dans un contexte de compétition de transformées, selon lequel l'encodeur applique au bloc courant la transformée qui conduit aux meilleures performances d'un point de vue débit distorsion, le fait de prédire une sous-liste de transformées ayant une forte probabilité d'être sélectionnées par l'encodeur, permet de réduire la quantité d'information à signaler dans le train binaire pour permettre au décodeur d'identifier la transformée appliquée.

L'invention s'appuie donc sur une approche tout à fait nouvelle et inventive de la compétition de transformées qui consiste d'une part à déterminer, pour un bloc courant, une sous-liste de transformées probables, dont la connaissance est partagée par le codeur et le décodeur et d'autre part de réaliser cette détermination en fonction d'informations intrinsèques au signal résiduel transformé du bloc courant, transmises dans le train binaire et donc disponibles au niveau du décodeur.

Contrairement à l'art antérieur qui signale la transformée utilisée par un indicateur de type de transformée (HEVC ou autre) puis par une signalisation explicite d'un identifiant de la transformée utilisée quand elle n'appartient pas au type HEVC, l'invention permet de s'affranchir d'une signalisation systématique, puisqu'elle propose de signaler la transformée appliquée au bloc courant en fonction de la donnée initiale d'identification que le décodeur a les moyens de déterminer à l'identique de l'encodeur.

Si la transformée appliquée correspond à l'unique transformée de la sous-liste prédite, l'encodeur n'a potentiellement aucune signalisation à transmettre au décodeur. L'invention permet ainsi de diminuer le coût de signalisation associé au choix d'une transformée et donc soit d'améliorer la qualité de la séquence d'images codée pour un débit donné, soit d'abaisser le débit de codage pour une qualité donnée par le gain en débit de signalisation qu'elle apporte.

Lorsque la donnée initiale représente une seule transformée, on peut limiter la signalisation à un flag, par exemple égal à zéro pour indiquer que la transformée appliquée correspond à la donnée initiale déterminée ou à 1 pour indiquer le contraire. Dans le cas d'un décodeur simplifié qui n'irait pas chercher une transformée ne correspondant pas à la donnée initiale déterminée, on peut décider de ne rien signaler du tout

Selon un aspect de l'invention, le procédé comprend une étape de codage d'une donnée complémentaire à la donnée initiale d'identification de transformées.
Lorsque la sous-liste de transformées comprend plus d'un élément, une donnée complémentaire est codée et insérée dans le train binaire, de façon à préciser au décodeur comment exploiter la sous-liste qu'il a déterminée pour le bloc courant.

Selon un autre aspect de l'invention, la donnée complémentaire comprend un index de position de la transformée dans la sous-liste déterminée.

Lorsque la transformée appliquée au bloc courant fait partie de la sous-liste déterminée, l'index de position permet au décodeur d'identifier la transformée de la sous-liste qui a été appliquée au bloc courant par l'encodeur. On comprend que si la sous-liste est courte, l'index de position peut être codé sur peu de bits.

Cette indication est avantageusement portée par un bit de valeur 0. Dans le cas opposé, l'identifiant complémentaire sera porté par un bit de valeur 1, complété par la signalisation explicite de la transformée appliquée. Dans la mesure où la donnée initiale, représentative de la sous-liste SL, a correctement prédit la transformée, la signalisation complémentaire ne comporte donc qu'un bit. Selon un autre aspect de l'invention, lorsque la transformée appliquée n'appartient pas à la sous-liste déterminée, l'index de position prend une valeur d'échappement et la donnée complémentaire comprend en outre l'identifiant de la transformée appliquée.

Lorsque la transformée appliquée n'est pas sélectionnée dans la sous-liste prédite, il est nécessaire de signaler un identifiant complet de la transformée réellement appliquée par l'encodeur.

Un avantage de l'invention est que, si les sous-listes sont constituées de façon pertinente et comprennent les transformées susceptibles d'obtenir les meilleures performances, alors cette situation reste exceptionnelle.

On notera en outre que lorsque l'encodeur met en œuvre une compétition de transformées, il sélectionne généralement la meilleure transformée selon un critère débit-distorsion qui prend avantageusement en considération le coût de signalisation de chacune des transformées en compétition. De cette manière, il ne sélectionnera une transformée hors sous-liste que si ses performances compensent le surcoût de signalisation.

Selon un autre aspect de l'invention, ladite au moins une caractéristique représentative d'au moins une valeur de coefficient du bloc résidu transformé appartient au groupe comprenant au moins :
- une position du dernier coefficient résidu quantifié significatif ;
- une liste des positions des coefficients résidus significatifs ;
- une somme des carrés des coefficients résidus quantifiés ;
- une somme des valeurs absolues des coefficients résidus quantifiés ;
- une valeur représentative d'une évolution des carrés des coefficients résidus quantifiés ;
- une valeur représentative d'une évolution des valeurs absolues des coefficients résidus quantifiés ;
- une valeur représentative d'une densité de probabilité des coefficients résidus quantifiés.

Ces caractéristiques peuvent être considérées individuellement ou en combinaison. Le principe de l'invention est d'associer à une valeur ou une plage de valeurs d'une ou plusieurs caractéristiques du signal résiduel quantifié du bloc courant, qui soient suffisamment distinctives pour permettre d'isoler une ou plusieurs transformées les plus probables pour ce bloc.

Selon encore un autre aspect de l'invention, l'étape de détermination comprend la lecture dans une mémoire de la donnée initiale d'identification déterminée, ladite donnée étant associée à ladite au moins une caractéristique d'au moins une valeur d'un coefficient résidu quantifié du bloc courant. Les sous-listes de transformées probables sont prédéterminées. Un avantage de ce mode de réalisation est d'être simple et peu coûteux en ressources de calcul.

Selon encore un autre aspect de l'invention, un score ayant été préalablement attribué à une transformée pour au moins une caractéristique d'au moins une valeur d'un coefficient résidu quantifié du bloc courant, l'étape de détermination constitue la sous-liste à partir des transformées de la liste dont le score est supérieur à un seuil prédéterminé.

Avantageusement à une transformée donnée on attribue un score en fonction d'au moins une valeur d'au moins une caractéristique du signal résidu quantifié du bloc et, pour le bloc courant, on construit dynamiquement une sous-liste des transformées dont les scores sont supérieurs à un seuil prédéterminé.

Par exemple, les scores ont été établis à partir de statistiques de performances de transformées calculées pour un ensemble de séquences de tests. A partir de telles statistiques, on peut déterminer des valeurs de probabilités qu'une transformée particulière soit la plus performante pour un bloc pour lequel au moins une caractéristique particulière du signal résiduel quantifié prend une valeur particulière.

Un avantage est de constituer la sous-liste la mieux adaptée possible au bloc courant.

De façon alternative, les transformées sont ordonnées selon des valeurs de score décroissantes et on forme la sous-liste à partir d'un nombre prédéterminé de transformées ayant obtenu les scores les plus élevés. Un avantage est que les sous-listes formées sont de taille fixe.

Selon encore un autre aspect de l'invention, l'étape de détermination de la donnée initiale d'identification de transformées insère dans la sous-liste la transformée appliquée à au moins un bloc voisin déjà traité.

On peut avantageusement envisager de prendre en considération d'autres critères, en plus des caractéristiques du signal résidu quantifié, pour constituer une sous-liste de transformées probables pour le bloc courant. Une option est de prendre en considération les transformées appliquées à des blocs voisins du bloc courant déjà traités. On peut ensuite choisir d'ajouter les transformées utilisées par les voisins à la sous-liste ou bien de ne conserver que les transformées communes.

Le procédé qui vient d'être décrit dans ses différents modes de réalisation est avantageusement mis en oeuvre par un dispositif de codage d'une image numérique selon l'invention. Un tel dispositif comprend au moins les unités suivantes, aptes à être mises en oeuvre pour un bloc courant, de dimensions prédéterminées :
- Prédiction des valeurs du bloc courant à partir d'au moins un bloc précédemment traité selon un mode de prédiction choisi parmi une pluralité de modes prédéterminés,
- Calcul d'un bloc résidu par soustraction des valeurs prédites aux valeurs originales du bloc courant,
- Obtention d'un bloc résidu transformé par application d'une transformée à des pixels du bloc résidu, ledit bloc résidu transformé comprenant des coefficients, la transformée appartenant à une liste de transformées prédéterminées ; et
- Codage du bloc résidu transformé .

Selon l'invention, un tel dispositif comprend en outre une unité de calcul d'au moins une caractéristique représentative d'au moins un coefficient résidu transformé du bloc courant et une unité de détermination d'une donnée initiale d'identification représentative d'une sous-liste d'au moins une transformée associée à ladite au moins une caractéristique calculée.

Bien sûr, le dispositif de codage selon l'invention peut être agencé pour mettre en œuvre, de façon indépendante ou en combinaison, l'ensemble des modes de réalisation qui viennent d'être décrits pour le procédé de codage.

En particulier, selon un aspect de l'invention, il comprend une unité de codage d'une donnée complémentaire à la donnée initiale déterminée.

Corrélativement, l'invention concerne un procédé de décodage d'une image numérique à partir d'un train binaire comprenant des données codées représentatives de ladite image, ladite image étant divisée en une pluralité de blocs traités dans un ordre défini, ledit procédé comprenant les étapes suivantes, mises en œuvre pour un bloc, dit bloc courant :
- Prédiction du bloc courant à partir d'au moins un bloc précédemment traité;
- Décodage des valeurs codées des coefficients du bloc résidu transformé extraites du train binaire ;
- Obtention d'un bloc résidu par application au bloc résidu transformé de la transformée inverse identifiée, ladite transformée inverse appartenant à une liste prédéterminée de transformées inverses;
- Reconstruction du bloc décodé à partir du bloc résidu et de la prédiction du bloc courant;

Selon l'invention, ledit procédé comprend une étape de calcul d'au moins une caractéristique représentative d'au moins un coefficient résidu transformé du bloc courant, une étape de détermination d'une donnée initiale d'identification de transformées associée à ladite au moins une caractéristique calculée et une étape de reconstruction d'un identifiant de la transformée inverse appliquée au moins à partir de la donnée initiale déterminée.

Un tel procédé reproduit les étapes de calcul de caractéristiques du signal résiduel transformée et de détermination d'une donnée initiale d'identification de transformées qui viennent d'être décrites pour l'encodeur. Pour ce faire, il exploite les informations dont il dispose, à savoir celles qu'il extrait du train binaire, comme par exemple le signal résidu transformé, quantifié ou non, du bloc courant, les informations et les règles qu'il a préalablement stockées en mémoire, qui lui permettent de déterminer la même sous-liste que l'encodeur pour le bloc courant.

Il reconstruit ensuite l'identifiant de la transformée appliquée par l'encodeur au bloc courant au moins à partir de la connaissance de cette sous-liste. Lorsque les sous-listes ont au plus un élément, la donnée initiale d'identification peut suffire à reconstruire l'identifiant de la transformée appliquée. On peut considérer un type de décodeur agencé pour appliquer systématiquement la transformée représentée par la donnée DI.

Selon un aspect de l'invention, le procédé comprend une étape de décodage d'une donnée complémentaire à la donnée d'identification déterminée.

On peut aussi considérer un autre type de décodeur agencé pour exploiter une telle signalisation complémentaire. Avantageusement, le décodage de cette donnée complémentaire précise l'information contenue dans la sous-liste de transformées. Elle peut en particulier indiquer au décodeur si la transformée appliquée se trouve bien dans la sous-liste représentée par la donnée DI.

Selon un autre aspect de l'invention, la donnée complémentaire comprend un index de position de la transformée utilisée dans la sous-liste déterminée.

Quand la transformée appliquée par l'encodeur est comprise dans la sous-liste, si cette sous-liste comprend plus d'un élément, la signalisation se résume à indiquer la position de la transformée. Selon encore un autre aspect, la donnée complémentaire comprend un code d'échappement et un identifiant de la transformée appliquée.

Lorsque la transformée appliquée par l'encodeur au bloc courant n'est pas comprise dans la sous-liste, il est nécessaire de signaler complètement la transformée.

Le procédé qui vient d'être décrit dans ses différents modes de réalisation est avantageusement mis en oeuvre par un dispositif de décodage d'une image numérique selon l'invention. Un tel dispositif comprend au moins les unités suivantes, apte à être mises en œuvre pour un bloc, dit bloc courant :
- Prédiction du bloc courant à partir d'au moins un bloc précédemment traité;
- Décodage des valeurs codées des coefficients du bloc résidu transformé extraites du train binaire
- Obtention d'un bloc résidu par application au bloc résidu transformé d'une transformée inverse, ladite transformée inverse appartenant à une liste de transformées inverses prédéterminées ;
- Reconstruction du bloc décodé à partir du bloc résidu et de la prédiction du bloc courant;

Selon l'invention, un tel dispositif comprend une unité de calcul d'au moins une caractéristique représentative d'au moins un coefficient résidu transformé du bloc courant, une étape de détermination d'une donnée initiale d'identification de transformées associée à ladite au moins une caractéristique calculée et en ce qu'il comprend une étape de reconstruction d'un identifiant de la transformée inverse à appliquer au moins à partir de la donnée initiale déterminée.

Bien sûr, le dispositif de décodage selon l'invention peut être agencé pour mettre en œuvre, de façon indépendante ou en combinaison, l'ensemble des modes de réalisation qui viennent d'être décrits pour le procédé de décodage.

En particulier, selon un aspect de l'invention, il comprend une unité de décodage d'une donnée complémentaire à la donnée initiale déterminée et l'unité de reconstruction est apte à reconstruire l'identifiant de la transformée inverse à appliquer au bloc courant à partir de la donnée initiale et de ladite donnée complémentaire.

L'invention concerne en outre un signal porteur d'un train binaire et comprenant des données codées représentatives d'une image numérique, ladite image numérique étant divisée en blocs de pixels traités dans un ordre défini, les valeurs d'un bloc courant étant prédites à partir des valeurs d'au moins un bloc précédemment traité selon un mode de prédiction choisi parmi une pluralité de modes prédéterminés, les valeurs d'un bloc résidu étant calculées par soustraction des valeurs prédites aux valeurs originales du bloc courant, un bloc résidu transformé étant obtenu par application d'une transformée à des pixels du bloc résidu, ledit bloc résidu transformé comprenant des coefficients, la transformée appartenant à une liste de transformées prédéterminée.

Selon l'invention, un tel signal comprend une donnée codée complémentaire représentative de la transformée appliquée, destinée à être exploitée pour reconstruire un identifiant de la transformée inverse à appliquer aux valeurs d'un bloc résidu courant, à partir d'une donnée initiale d'identification de transformées, ladite donnée initiale étant représentative d'une sous-liste d'au moins une transformée de ladite liste et associée à au moins une caractéristique d'au moins une valeur du bloc résidu transformé courant.

L'invention concerne aussi un terminal d'ordinateur comprenant un dispositif de codage d'une image numérique selon l'invention et un dispositif de décodage d'une image numérique selon l'invention, qui viennent d'être décrits dans leurs différents modes de réalisation.

L'invention concerne encore un programme d'ordinateur comportant des instructions pour la mise en œuvre des étapes d'un procédé de codage d'une image numérique tel que décrit précédemment, lorsque ce programme est exécuté par un processeur.

L'invention concerne aussi un programme d'ordinateur comportant des instructions pour la mise en oeuvre des étapes d'un procédé de décodage d'une image numérique tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de codage d'une image numérique et au dispositif de décodage d'une image numérique selon l'invention, éventuellement amovible, mémorisant respectivement un programme d'ordinateur mettant en oeuvre un procédé de codage et un programme d'ordinateur mettant en oeuvre un procédé de décodage, tels que décrits précédemment.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 (déjà décrite) présente de façon schématique une séquence d'images numériques découpées en blocs de pixels ;
- la figure 2 (déjà décrite) présente de façon schématique les étapes d'un procédé de codage d'un bloc de pixels d'une image numérique selon l'art antérieur ;
- les figures **3A** et **3B** (déjà décrites) présentent les transformées DCT et DST mises en œuvre par l'encodeur de la norme HEVC ;
- la figure **4** présente de façon schématique les étapes d'un procédé de codage d'une image numérique selon l'invention ;
- la figure **5** présente un premier exemple de densité de probabilité de trois transformées en fonction d'une mesure de caractéristique du signal résiduel d'un bloc ;
- la figure **6** présente un exemple de constitution d'une sous-liste de transformées probables à partir de la combinaison de deux caractéristiques distinctes du signal résiduel transformé du bloc courant, selon un mode de réalisation de l'invention
- la figure **7** présente un exemple de blocs voisins déjà traités exploités pour la détermination d'une sous-liste de transformées probables pour un bloc courant, selon un mode de réalisation de l'invention ;
- les figures **8A** et **8B** présentent de façon schématique des exemples de signalisation de la transformée appliquée au bloc courant par le procédé de codage selon l'invention ;
- la figure **9** présente de façon schématique les étapes d'un procédé de décodage d'une image numérique selon l'invention ;
- la figure **10** présente de façon schématique la structure matérielle d'un dispositif de codage d'une image numérique selon l'invention ; et
- la figure **11** présente de façon schématique la structure matérielle d'un dispositif de décodage d'une image numérique selon l'invention.

### 7. Description d'un mode de réalisation particulier de l'invention

Le principe général de l'invention repose sur une prédiction de la transformée appliquée à un bloc courant en fonction de caractéristiques intrinsèques au signal résiduel transformé du bloc courant et sous la forme d'une sous-liste de transformées privilégiées et sur une signalisation minimale de la transformée appliquée à partir de la sous-liste prédite.

On considère une vidéo originale constituée d'une suite de K images I₁, I₂, ...I_{K}, avec K entier non nul, telle que celle déjà présentée en relation avec la Figure **1****.** Les images sont encodées par un encodeur, les données codées sont insérées un train binaire TB transmis à un décodeur via un réseau de communication, ou un fichier compressé FC, destiné à être stocké sur un disque dur par exemple. Le décodeur extrait les données codées, puis reçues et décodées par un décodeur dans un ordre prédéfini connu de l'encodeur et du décodeur, par exemple dans l'ordre temporel I₁, puis I₂, ..., puis IK, cet ordre pouvant différer suivant le mode de réalisation.

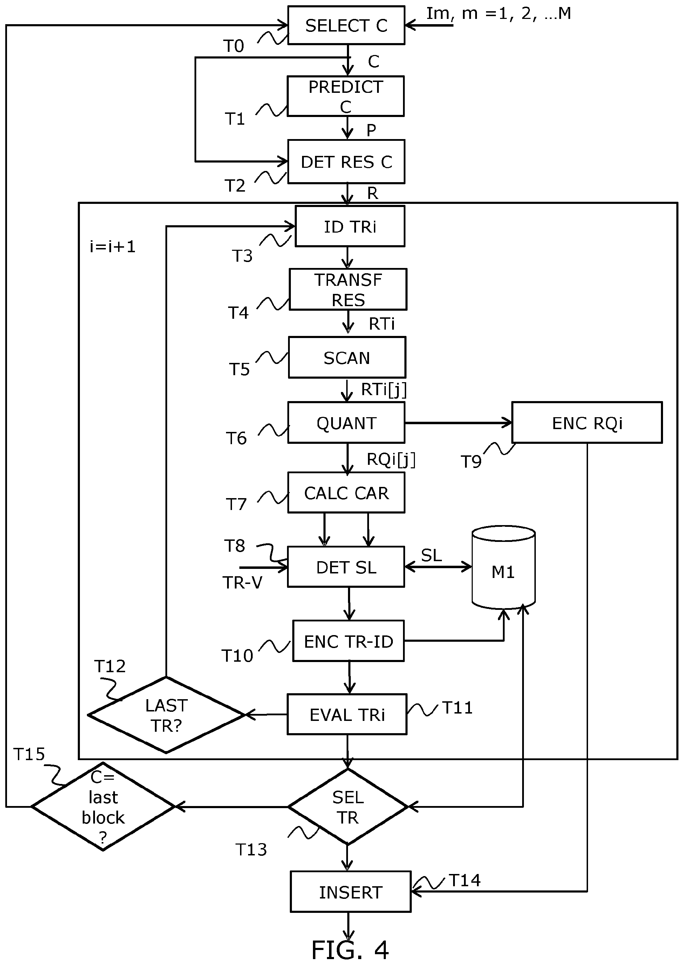

En relation avec la Figure **4****,** on considère maintenant les étapes d'un procédé de codage selon un mode de réalisation de l'invention. Les étapes T0 à T6 sont similaires aux étapes E0 à E6 déjà décrites en relation avec la Figure **2****.**

Une image Iₖ est découpée en blocs CTU de taille, par exemple égale à 64x64 pixels.

Au cours d'une étape T0, on sélectionne un bloc à traiter, dit bloc courant c. Par exemple, il s'agit d'un bloc CU (pour « Coding Unit », en anglais), carré ou rectangulaire, de dimensions MxN, avec M et N entiers non nuls, obtenu par partitionnement d'un bloc CTU (pour « Coding Tree Unit », en anglais).

Au cours d'une étape T1, il est procédé à une étape de prédiction du bloc c. Cette opération, conforme à l'art antérieur, est réalisée à partir de pixels issus de l'image en cours de codage (codage intra) ou reposant sur une image déjà traitée par l'opération d'encodage (codage inter). On obtient un bloc prédit Pr.

Au cours d'une étape T2, le bloc de pixels est soustrait, pixel à pixel, au bloc prédit au cours de l'opération précédente. On obtient un bloc de pixels résiduels R.

Au cours d'une étape T3, on identifie pour le mode de prédiction considéré, la taille de bloc et les transformées possibles. On désigne par transformées possibles une pluralité T de transformées disponibles en mémoire de l'encodeur de façon préétablie, avec T entier non nul, par exemple T est égal à 32. Par exemple, cette pluralité est stockée en mémoire sous forme d'une liste L prédéterminée, ordonnée ou non, de transformées. On notera que ces transformées peuvent être prédéterminées ou adaptatives.

Au cours d'une étape T4, pour une transformée Trᵢ identifiée, avec i entier non nul compris entre 0 et T-1, il est procédé à la transformation du signal résiduel. Un signal résiduel transformé RTᵢ est obtenu.

En T5, de façon connue dans l'état de l'art, ces coefficients sont scannés dans un ordre prédéterminé de façon à constituer un vecteur monodimensionnel RQ[j], où l'indice j varie de 0 à Nb-1, avec Nb nombre de pixels dans le bloc courant c. L'indice j est appelé fréquence du coefficient RQ[j]. Classiquement, on scanne ces coefficients par ordre globalement croissant ou décroissant de valeurs de fréquence, par exemple selon un parcours en zigzag, qui est connu de la norme de codage d'image fixes JPEG. Ce mode de parcours (pour « scanning » en anglais) peut aussi dépendre de la transformée appliquée. Comme le mode de parcours influence nécessairement l'ordre final des coefficients transformés dans le vecteur RQ, on considère dans la suite qu'une transformée identifiée Trᵢ dans la liste L est associée à un mode de parcours particulier. Autrement dit, la même transformée associée à un autre mode de parcours se verra affecter un autre identifiant de transformée dans la liste L et sera de ce fait considérée comme une transformée distincte.

Au cours d'une étape T6, les données transformées sont quantifiées suivant une méthode de quantification donnée, scalaire ou vectorielle connue de l'homme de l'art, avec un paramètre de quantification QP réglant la précision de l'approximation réalisée dans cette étape.

Au cours d'une étape T7, on calcule au moins une caractéristique du signal résiduel transformé quantifié.

En T8, on détermine une donnée initiale de transformée représentative d'au moins une transformée associée à la ou les caractéristiques calculées. Cette donnée initiale DI désigne avantageusement une sous-liste SL de transformées de la liste L. Elle comprend une ou plusieurs transformées.

Plusieurs modes de réalisation des étapes T7 et T8 sont envisagés et vont maintenant être détaillés.

Selon un premier mode de réalisation de l'invention, on procède à la détermination de la position du dernier coefficient non nul des données quantifiées résiduelles. On fait ensuite correspondre, à la caractéristique calculée, par exemple la position du dernier coefficient significatif, une donnée d'identification initiale de transformation DI. Cette donnée initiale d'identification permet d'identifier la sous-liste de transformées associée à la valeur de la caractéristique calculée ou à une plage de valeurs comprenant la valeur calculée. Avantageusement, la sous-liste est stockée en mémoire dans une table. La sous -liste peut comprendre une ou plusieurs transformées.

Selon un second mode de réalisation de l'invention, on procède à la détermination des positions des coefficients significatifs dans les données quantifiées résiduelles. Pour ce faire on construit un mot contenant un '1' pour chaque coefficient résiduel significatif (c'est-à-dire différent non-nul) et '0' pour un coefficient nul. Par exemple un résiduel composé des valeurs [19, 12,-4,0,18,3,0,-1,0,0] se verra affecté un mot '1110110100'. A l'aide d'une table stockée en mémoire, une donnée d'identification initiale de transformation DI est déterminée. Pour un mot de code donné, on obtient ainsi une sous-liste des transformations les plus vraisemblables disponibles.

Selon un troisième mode de réalisation on procède au calcul d'une donnée caractéristique de la somme des carrés ou des valeurs absolues des valeurs quantifiées résiduelles. A l'aide d'une table ou d'une relation fonctionnelle de correspondance, on détermine à partir de cette donnée caractéristique une donnée d'identification initiale de transformation DI. Par exemple, les résidus porteurs d'une énergie au-delà d'un seuil considéré identifient une ou plusieurs transformées.

Selon un quatrième mode de réalisation, on procède au calcul d'une valeur caractéristique de l'évolution des valeurs absolues ou des carrés des valeurs quantifiées résiduelles. Cette valeur caractéristique peut être obtenue en sommant les différences en valeur absolue des valeurs consécutives (absolues ou au carré) ou en sommant un indicateur de croissance (1 si deux valeurs consécutives croissent en valeur absolue, 0 sinon). A partir de la valeur caractéristique obtenue, on obtient à l'aide d'une table la donnée d'identification initiale de transformation. Cette table indiquera une ou plusieurs transformées suivant la valeur de l'indicateur de croissance calculé.

Selon un cinquième mode de réalisation on estime une caractéristique de la densité de probabilité des valeurs résiduelles quantifiées. Cette densité de probabilité peut être obtenue par une fonction du rapport entre somme des valeurs absolues et somme des carrés des valeurs résiduelles quantifiées, comme présenté dans la publication AES de Mai 2005 intitulée « Near Optimal, Low Complexity Arithmetic Coding for Generalized Gaussian Sources » par Florin Ghido. Une fois la densité de probabilité estimée, une table de correspondance permet d'y associer une donnée d'identification initiale de transformées DI. Par exemple, à une densité de probabilité donnée sera associée une ou plusieurs transformées données.

La donnée d'identification initiale de transformée DI peut ainsi comporter un ou plusieurs identifiants ou indices, pointant chacun sur une transformée particulière. Avantageusement, ces identifiants de transformées forment une sous-liste SL de la liste L initiale de transformées disponibles à l'encodeur et au décodeur.

Des tables permettant de déduire la sous-liste de transformées sont obtenues, par exemple dans une phase d'apprentissage préalable au procédé de codage d'une image. Par exemple, un ensemble de séquences de tests est utilisé pour calculer des statistiques de sélection par l'encodeur de chacune des transformées de la liste disponible à l'encodeur, en fonction des valeurs de caractéristiques des signaux résiduels transformés des blocs de l'image. A partir de ces résultats, on évalue la probabilité de sélection d'une transformée en fonction d'une ou plusieurs caractéristiques du signal résiduel quantifié d'un bloc.

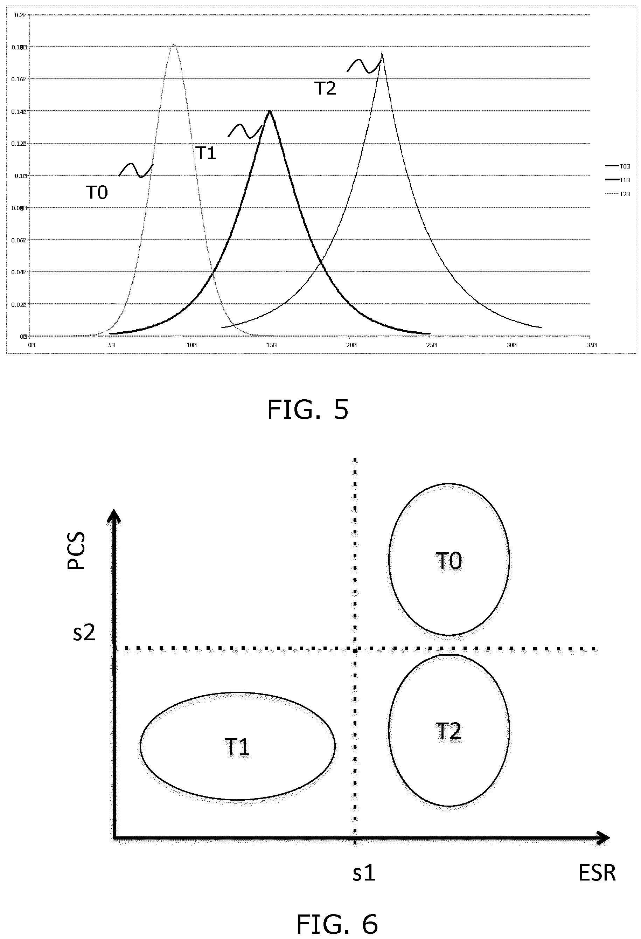

De façon classique on mesure pour chaque transformée la probabilité d'une caractéristique donnée connaissant la transformée. Mathématiquement cela s'exprime par la probabilité conditionnelle. En relation avec la figure **5****,** on présente, à titre d'exemple, une estimation de la probabilité de l'énergie du premier coefficient transformé pour 3 transformées de taille 8x8 distinctes. On a tracé la densité de probabilité conjointe associée à cette énergie pour chacun des coefficients d'un bloc. A partir de cette estimation, par le théorème de Bayes, on peut aisément à partir de la valeur d'énergie, déterminer la probabilité que celui-ci ait été calculé à partir de chaque transformée. Ainsi si l'énergie du coefficient vaut 9, il est hautement probable que la transformée utilisée soit T2, un peu moins probable que ce soit la transformée T1 et très peu probable que la transformée T0 ait été employée. Ainsi au niveau de l'encodeur, on peut à titre d'exemple résumer cette fonction de probabilité à deux seuils qui définissent trois intervalles : si l'énergie est inférieure à 11.4 alors T2 et T1 sont les plus probables, si elle est comprise entre 11.40 et 18.10 alors T1 est probable, si elle est supérieure à 18.10 alors T1 et T0 sont les transformées les plus probables. On comprend que, de cette manière, la caractéristique calculée sur le signal résiduel renseigne sur la probabilité d'une transformée et permet de constituer une sous-liste de transformées probables plus courte que la liste complète des transformées. Ainsi, suivant la valeur d'énergie du bloc par rapport aux trois intervalles précédents, on définit trois sous listes SL1, SL2, et SL3 comprenant les transformées (T2,T1), (T1), (T1,T0). L'association sous-liste, caractéristique, intervalles qui est établie dans une phase préalable à la conception du système de codage est connue de l'encodeur et décodeur.

En relation avec la figure **6****,** on présente un exemple de constitution d'une sous liste de transformées à partir de la combinaison de deux caractéristiques distinctes du signal résiduel du bloc courant et d'une liste L de trois transformées. Dans un processus d'apprentissage préalable, on mesure les valeurs de transformées choisies par un codeur en fonction d'une caractéristique d'énergie du signal résiduel transformé et d'une position du dernier coefficient significatif. Cet apprentissage est réalisé sur un grand ensemble de signaux vidéo résiduels. Sur la figure **6****,** on a représenté la première caractéristique selon un premier axe et la deuxième selon un deuxième axe et placé dans le plan de ces deux axes des points correspondant à un couple de valeurs des caractéristiques du signal résiduel transformé d'un bloc et représentant la transformée sélectionnée pour ce bloc. On constate que ces points peuvent être sommairement regroupés en zones grossières, matérialisées sous formes d'ellipse. Ces ellipses englobent la majorité des points sélectionnés pour une transformée, par exemple elles peuvent englober 90% des points.

Sur cette base sont déterminés deux seuils s1, s2 qui permettent de former une sous liste comprenant un élément de transformée.

Ces seuils déterminés sont connus à l'issue de cet apprentissage et sont stockés à la fois à l'encodeur et au décodeur. Ainsi la sous-liste de un élément est constituée de la façon suivante :
- A partir du signal résiduel on calcule une caractéristique d'énergie, nommé C1 ;
- A partir du signal résiduel on détermine la position du dernier coefficient significatif, nommé C2 ;
- Si C1>s1 et C2>s2 alors la sous liste contient l'élément T0 ;
- Si C1>s1 et C2<s2 alors la sous liste contient l'élément T2 ;
- Si C1<s1 alors la sous liste contient la transformée T1.

Ainsi une liste de trois transformées peut être réduite, à l'aide de ces deux critères et de deux seuils connus du décodeur et du codeur, à une sous-liste d'une seule transformée.

De façon alternative, on peut aussi préalablement établir, pour une transformée donnée de la liste L, un score en fonction d'une ou plusieurs valeurs de caractéristiques du signal résiduel transformé d'un bloc. Ce score est avantageusement établi à partir à partir de l'estimation de densité de probabilité conjointe précédemment décrite. Dans ce cas, l'étape T7 de détermination d'une donnée initiale de transformées DI associées à cette ou ces valeurs de caractéristiques, constitue dynamiquement une sous-liste de transformées SL pour le bloc courant, en fonction des scores établis.

Par exemple, la sous-liste SL est constituée des transformées dont les scores établis pour le bloc courant sont supérieurs à un seuil prédéterminé. De façon alternative, la sous-liste est constituée d'un nombre prédéterminé NB-SL, entier non nul, de transformées, correspondant aux NB-SL transformées ayant obtenu les scores les plus élevés.

Les transformées sélectionnées pour figurer dans la liste SL sont avantageusement ordonnées selon des valeurs de scores décroissantes. On comprend qu'il est nécessaire que le décodeur partage avec l'encodeur la connaissance de ces scores, la valeur du seuil à appliquer ou le nombre NB-SL de transformées à sélectionner et la manière d'ordonner les transformées dans la sous-liste. De cette manière, il constituera la même sous-liste SL que l'encodeur.

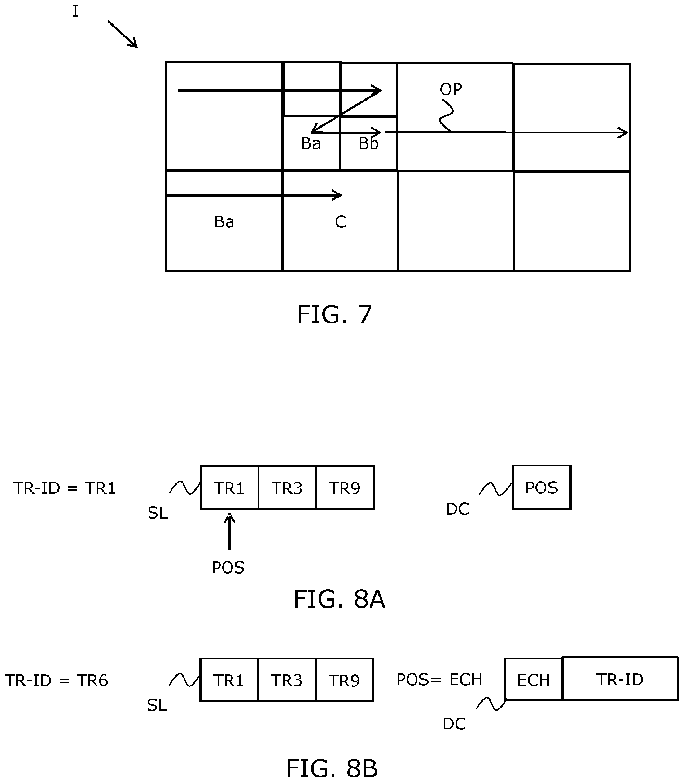

Selon un autre mode de réalisation de l'invention, le procédé obtient préalablement un identifiant TR-V de la transformée appliquée à au moins un bloc déjà traité. Les blocs déjà traités sont sélectionnés par exemple en fonction du mode de prédiction du bloc courant. Ils peuvent être voisins du bloc courant dans l'image en cours ou appartenir à d'autres images situées à des instants différents. Dans l'image en cours, ces blocs voisins peuvent être les blocs situés immédiatement au-dessus, à gauche, ou en haut à gauche du bloc courant. En relation avec la figure **7****,** on a représenté à titre d'exemple les blocs Ba, Bb et Bc voisins du bloc courant C.

Pour le codage inter, il s'agit par exemple des blocs localisés aux mêmes positions spatiales que le bloc courant, ou « co-localisés », à un vecteur de mouvement près. Ces blocs déjà traités sont avantageusement retenus lorsqu'ils partagent le même mode de prédiction que le bloc courant. Si le bloc courant est en mode Intra, alors les blocs déjà traités retenus seront les blocs les plus proches qui partagent le même mode de prédiction Intra.

Avantageusement, on considère un nombre prédéterminé NB-DT, avec NB-DT entier non nul, de blocs déjà traités. Par exemple NB-DT est égal à 3. Le ou les identifiants de transformées des blocs déjà traités ainsi obtenus sont exploités pour constituer une nouvelle sous-liste SL' de transformées privilégiées à partir de la sous-liste SL déjà associée à la ou les caractéristiques des valeurs des coefficients du bloc courant selon l'un des modes de réalisation déjà décrits.

Plusieurs façons de constituer cette nouvelle sous-liste SL' sont envisagées.

On peut compléter la sous-liste SL' initiale en lui concaténant les identifiants des transformées appliquées aux blocs déjà traités considérés.

On peut décider d'exploiter un nombre prédéterminé d'identifiants de transformées issus des blocs déjà traités, par exemple égal à trois.

Si, en relation avec la Figure **7****,** les blocs Ba, Bb, Bc déjà traités considérés partagent la même transformée (TR-v=TR-va=tr-vb=tr-vc), alors on ajoute l'identifiant (TR-v) de cette transformée commune à la sous-liste SL, s'il n'est pas déjà contenu dans cette liste. On peut par exemple convenir de l'insérer en fin de sous-liste.

De façon alternative, on peut décider d'insérer dans la sous-liste SL' un nombre prédéterminé NB-DT de transformées issues des blocs déjà traités. Dans ce cas, on peut par exemple compléter l'unique identifiant retenu (TR-v) par les identifiants des transformées qui le précèdent et qui lui succèdent immédiatement dans la liste L initiale de transformées. Il s'agit des valeurs immédiatement au-dessus (TR-v₁=TR-v+1) et au-dessous (TR-v₂=TR-v-1). On comprend que dans ce cas on considère que la liste L de transformées disponibles à l'encodeur et au décodeur, est ordonnée selon un critère de proximité ou de similarité des transformées, de telle sorte que si la transformée numéro TR-v est bien adaptée à un bloc, alors ses voisines TR-v-1 et TR-v+1 le seront relativement bien aussi.

Si les NB-DT blocs déjà traités considérés se sont vus appliquer des transformées distinctes, on peut recourir à un vote majoritaire et insérer dans la sous-liste SL' l'identifiant de la transformée la plus représentée dans les blocs déjà traités. Pour compléter et atteindre le nombre prédéterminé d'identifiants de transformées à ajouter, les valeurs voisines de la transformée élue dans la liste L, TR-v1 et TR-v2 telles que calculées ci-dessus, seront avantageusement insérées.

Une alternative consiste à insérer les identifiants de toutes les transformées appliquées aux blocs déjà traités considérés, par exemple à la fin de la sous-liste SL selon un ordre de parcours des blocs déjà traités partagé par l'encodeur et le décodeur, dans la mesure où ils ne figurent pas déjà dans la liste.

On considère par exemple trois blocs voisins déjà traités, qui se sont vus appliquer deux transformées distinctes. On insère par exemple en première et deux positions à la fin de la sous-liste SL les identifiants v0 et v1 de ces transformées et on ajoute par exemple la valeur v2 de l'identifiant de la transformée, calculée à partir du bloc voisin le plus proche du bloc courant (immédiatement à gauche étant privilégié par rapport à un bloc plus haut ou appartenant à une image différente).Selon une variante, on réalise l'intersection de la sous-liste initiale SL et de celle des transformées appliquées aux blocs voisins déjà traités. Ce croisement permet de réduire la taille de la sous-liste finale et donc la signalisation de la transformée appliquée au bloc courant. Ce croisement peut être réalisé en tenant compte des probabilités d'occurrence des transformées insérées dans les sous listes.

En T9, les données quantifiées sont encodées par une technique de codage entropique connue, telle que par exemple un codage de Huffman, codage arithmétique ou encore codage CABAC tel qu'utilisé dans la norme HEVC.

Au cours d'une étape T10, on encode si nécessaire une donnée complémentaire de la donnée initiale d'identification de la transformée DI.

Dans un mode de réalisation particulier de l'invention, cette étape n'est pas mise en œuvre. C'est le cas lorsque la donnée initiale de transformée ne comprend qu'un seul identifiant de transformée et/ou lorsqu'il a été décidé de ne pas signaler au décodeur le fait d'avoir appliqué au bloc courant une transformée différente de celle prédite. On comprend qu'on se place ici dans un cas simple, où le décodeur est agencé pour appliquer exclusivement la transformée identifiée par la donnée initiale.

Un avantage de ce mode est qu'il est simple à mettre en œuvre et qu'il ne nécessite pas de signalisation.

Pour les autres modes de réalisation, selon lesquels les sous-listes de transformées associées à certaines caractéristiques du bloc courant comprennent plus d'un élément ou bien selon lesquels on souhaite éventuellement signaler au décodeur le fait que la transformée appliquée n'appartient pas à la sous-liste prédite, l'étape T10 est bien mise en œuvre.

En T10, on commence donc par vérifier si la transformée Trᵢ appliquée au bloc courant appartient à la sous-liste SL. Si c'est le cas et si la sous-liste SL comprend un seul élément, la transformée appliquée correspond à la transformée prédite. Avantageusement, on signale au décodeur le fait que la donnée initiale constitue une prédiction correcte de la transformée appliquée, par exemple à l'aide d'une approche « flag ». Celle-ci consiste à coder de façon classique par un code binaire entropique ou direct, une donnée complémentaire DC indiquant si la transformation indiquée par la donnée initiale DI est celle de la transformation considérée (flag=0) ou non (flag=l).

Si le flag est mis à la valeur 1, alors on ajoute à l'information complémentaire un code indiquant l'identifiant, par exemple sous la forme d'un index, de la transformation considérée dans la liste L d'origine, à l'aide d'un code (entropique ou non).

Un avantage est que si on prédit bien la transformée appliquée au bloc courant, on utilisera un seul bit pour la signaler, contrairement à l'état de l'art qui transmet explicitement l'identifiant de la transformée.

Si la sous liste SL comprend plusieurs éléments, la donnée initiale d'identification DI de transformée n'est pas suffisante pour permettre au décodeur de déterminer la transformée appliquée par l'encodeur.

Selon un autre mode de réalisation de l'invention, on encode en T10 une donnée complémentaire DC comprenant un index de position POS de la transformée appliquée au bloc courant dans la sous-liste SL, SL'. On fait donc l'hypothèse que la sous-liste est ordonnée de telle sorte que le codeur et le décodeur partagent la connaissance des positions des transformées dans la sous-liste.

A titre d'exemple, on considère que la sous-liste déterminée en T8 contient les transformations {1,4,7} : Si la transformée appliquée est la transformée 4, on émet l'indicateur de position POS = 1, codé en binaire '01'.

Un avantage est que si on prédit bien la transformée appliquée au bloc courant, on n'utilisera que peu de bits pour la signaler dans le train binaire, contrairement à l'état de l'art qui transmet explicitement son identifiant complet.

Lorsque la transformée appliquée n'appartient pas à la sous-liste SL, SL', la donnée complémentaire DC comprend un code d'échappement suivi d'un identifiant complet de la transformée appliquée. On comprend que cette signalisation est nécessairement plus coûteuse qu'un index de position POS dans la sous-liste. Néanmoins, le mode de sélection de la transformée par compétition garantit que, malgré ce surcoût, la transformée appliquée soit celle qui apporte le meilleur compromis débit distorsion.

Si, par exemple, la transformée considérée est la transformée 6, qui ne fait pas partie de la sous-liste déterminée, on émet un code d'échappement, par exemple égal à '11' et on adjoint un code identifiant la transformée 6 dans la liste L d'origine, par exemple 0110 qui représente 6 sous forme binaire. On peut affecter au code d'échappement une combinaison non utilisée du code de l'index de position. Par exemple, on peut utiliser le code 0100 qui représente 4 en binaire. Cela a pour vocation à réduire la longueur du code particulier et ainsi réduire le débit.

Avantageusement, on encode ensuite la donnée complémentaire DC par une technique de codage binaire (code à longueur fixe, arithmétique ou de Huffman), bien connue de l'homme de métier, de façon à minimiser la taille du train binaire à transmettre au décodeur.

Au cours d'une étape T11, on procède à l'évaluation, pour la transformée courante Trᵢ, de la distorsion, par exemple selon une mesure d'erreur quadratique classique en soi, introduite par l'opérateur de quantification.

Avantageusement, cette étape d'évaluation comprend aussi :
- une évaluation du nombre de bits requis pour transmettre le résidu transformé et quantifié ;
- une évaluation du nombre de bits nécessaire à la signalisation de l'indice de la transformation à partir du résultat de l'encodage T10.

En T12, on teste si la transformée courante Trᵢ est la dernière de la liste L. Si ce n'est pas la dernière, on incrémente l'indice i de 1 et on répète les étapes T3 à T11

Si la transformée Trᵢ est la dernière de la liste, on passe à l'étape T13 de sélection d'une configuration à émettre. Par configuration on entend l'ensemble résidu quantifié et codé de façon entropique/signalisation de l'index de transformation par le code complémentaire. Pour réaliser cette sélection, on procède conformément aux techniques connues, à la construction d'un lagrangien pour chaque transformation qui pondère la distorsion correspondante et l'ensemble débit porté par le résidu/signalisation complémentaire. La sélection retient la transformée présentant le lagrangien minimal.

Dans une étape T14, le résidu sélectionné et les données complémentaires encodées associées à la transformation appliquée au bloc courant sont insérées dans un train binaire.

Le train binaire TB peut ensuite être émis à destination d'un décodeur sous la forme d'un signal

En relation avec les Figures **8A** et **8B****,** on présente des exemples de signalisation de transformée appliquée au bloc c selon un mode de réalisation de l'invention. En relation avec la Figure **8A****,** on considère un premier exemple dans lequel la transformée Trᵢ appliquée au bloc c est comprise dans la sous-liste SL, SL' déterminée. Il s'agit de la transformée Trᵢ qui occupe la première position de la sous-liste SL, SL' déterminée pour le bloc c. Selon l'invention, la signalisation se limite à une donnée complémentaire DC qui représente un index de position POS de TR1 dans la sous-liste. Par exemple, pour cette sous-liste de trois éléments, cet index peut être codé sur 2 bits par la valeur 01. Bien sûr, comme déjà évoqué, on peut aussi choisir des codes de longueur variable, tels que des codes de Huffman ou un autre codeur entropique, connus de l'homme de métier.

En relation avec la Figure **8B****,** on considère un deuxième exemple selon lequel la transformée Trᵢ appliquée au bloc c n'est pas comprise dans la sous-liste SL, SL' déterminée. Autrement dit, la prédiction de la transformée n'est pas correcte. Par exemple la transformée appliquée est Tr₆. Dans ce cas, la donnée complémentaire signalée comprend un code d'échappement, qui prend par exemple la valeur 11 suivi d'un code de l'identifiant complet de la transformée Tr₆.

Comme précédemment décrit, la signalisation de l'identifiant de la transformée appliquée en fonction de la sous-liste SL, SL' déterminée peut être soumise à un encodage de type entropique en vue d'améliorer les performances de compression.

Le train binaire TB produit par le procédé de codage selon l'invention est par exemple transmis sous la forme d'un signal à un décodeur par l'intermédiaire d'un réseau de télécommunication. Ce signal est reçu par un décodeur,

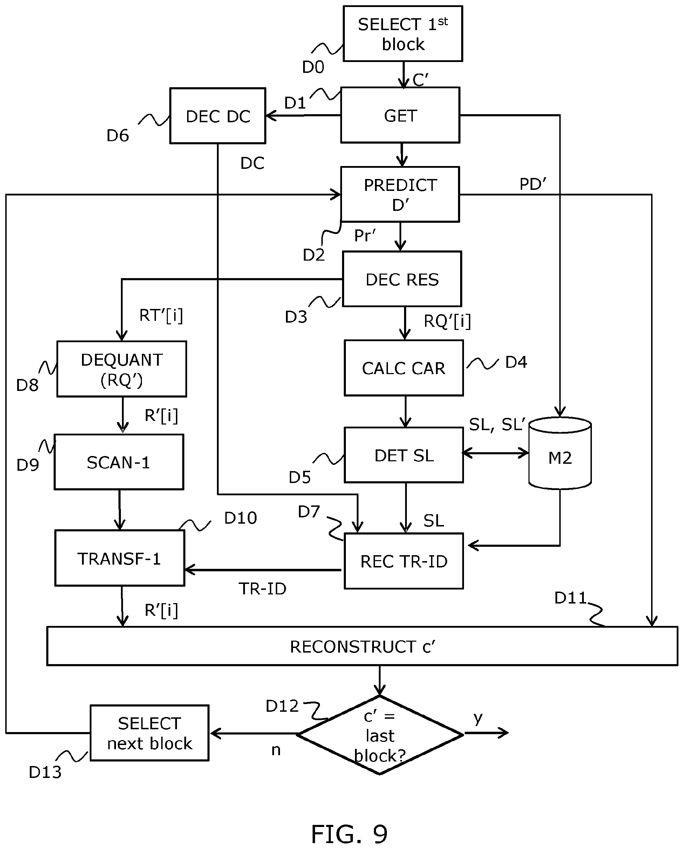

On suppose que le train binaire TB a été reçu par un dispositif de décodage mettant en oeuvre un procédé de décodage selon l'invention. Ce procédé de décodage va maintenant être décrit en relation avec la Figure **9****.**

En D0, on commence par sélectionner comme bloc courant C' le premier bloc à traiter. Par exemple, il s'agit du premier bloc (dans l'ordre lexicographique). Ce bloc comporte MxN pixels, avec M et N entiers non nuls.

Comme décrit pour le procédé d'encodage, le bloc C' considéré peut être un bloc CTU ou un sous-bloc CU obtenu par découpage du bloc CTU ou encore un bloc ou sous-bloc résidu obtenu par soustraction d'une prédiction du bloc courant au bloc courant.

Au cours d'une étape D1, les données codées relatives au bloc courant C' sont lues et décodées. Les données codées, comprennent des paramètres de codage, tels que par exemple le mode de prédiction utilisé, ou une signalisation d'un identifiant de la transformée appliquée au bloc courant et les valeurs relatives aux amplitudes et aux signes des coefficients résidus quantifiés du bloc courant.

Lorsque le mode de prédiction déterminé indique qu'une prédiction a été faite par l'encodeur, le bloc courant est prédit en D2, selon le mode de prédiction déterminé à partir d'un bloc déjà traité. Un bloc prédit Pr' est obtenu.

Au cours d'une étape D3, on décode les données lues représentatives des valeurs quantifiées, résiduelles du bloc courant (valeurs et signes des coefficients), sous la forme d'un vecteur de valeurs RQ'. On comprend qu'il s'agit de l'opération inverse de celle de codage entropique précédemment décrite en relation avec le procédé d'encodage.

Au cours d'une étape D4, on procède au calcul d'au moins une caractéristique des valeurs quantifiées décodées. Ce calcul, réalisé en conformité avec celui effectué à l'encodeur, prend en considération un critère de calcul basé sur le résiduel quantifié transmis.

En D5, on détermine une sous-liste SL, SL' de transformées associées à la ou les valeurs de caractéristiques calculées.

Plusieurs modes de réalisation de ces étapes D4 et D5 sont envisagés. Ils correspondent à ceux déjà décrits en relation avec la Figure **4** pour les étapes T6 et T7 du procédé de codage. Ils sont combinables entre eux.
- dans un premier mode de réalisation on procède à la détermination de la position du dernier coefficient non-nul des données quantifiées du bloc courant. A partir de cette position, on fait correspondre, à l'aide d'une table stockée en mémoire M1, une donnée d'identification initiale de transformation DI comprenant une ou plusieurs transformées. De façon alternative, la caractéristique calculée correspond au nombre de coefficients significatifs. A titre d'exemple, la table pourra dans ce cas associer à un nombre seuil de coefficients significatifs donné une ou plusieurs transformées prédéterminées.
- dans un second mode de réalisation on procède à la détermination des positions des coefficients significatifs dans les données quantifiées du bloc courant. Pour ce faire on construit un mot contenant un '1' pour chaque coefficient significatif (c'est-à-dire différent non-nul) et '0' pour un coefficient nul. Par exemple un signal composé des valeurs [19,12,-4,0,18,3,0,-1,0,0] se verra affecté un mot '1110110100'. A l'aide d'une table stockée en mémoire, une donnée d'identification initiale de transformation est déterminée. Un mot de code donné identifie une sous-liste SL des transformées les plus vraisemblables disponibles.
- dans un troisième mode de réalisation on procède au calcul d'une donnée caractéristique de la somme des carrés ou des valeurs absolues des valeurs quantifiées des coefficients. A l'aide d'une table ou d'une relation fonctionnelle de correspondance entre, par exemple des intervalles de valeurs de la caractéristique et des donnée initiale d'identification de transformées DI préétablies, on détermine à partir de cette donnée caractéristique la donnée d'identification initiale de transformation DI correspondant à une sous-liste SL de transformées bien adaptées à la valeur de cette caractéristique. On notera que la caractéristique en question représente une énergie portée par les coefficients du bloc courant C'. Par exemple les résidus porteurs d'une énergie au-delà d'un seuil considéré identifieront une sous-liste SL1, tandis que ceux dont l'énergie est inférieure à ce seuil en identifieront une autre SL2.
- dans un quatrième mode de réalisation, on procède au calcul d'une valeur caractéristique de l'évolution des valeurs absolues ou des carrés des valeurs quantifiées. Cette valeur caractéristique peut être obtenue en sommant les différences en valeur absolue des valeurs consécutives (absolues ou au carré) ou en sommant un indicateur de croissance (1 si deux valeurs consécutives croissent en valeur absolue, 0 sinon). A partir de la valeur caractéristique obtenue, on obtient à l'aide d'une table la donnée d'identification initiale de transformation correspondant à une sous-liste de transformées bien adaptée.
- dans un cinquième mode de réalisation on estime une caractéristique de la densité de probabilité des valeurs quantifiées. Cette densité de probabilité peut être obtenue par une fonction du rapport entre somme des valeurs absolues et somme des carrés des valeurs quantifiées, comme présenté dans la publication AES de Mai 2005 intitulée « Near Optimal, Low Complexity Arithmetic Coding for Generalized Gaussian Sources » par Florin Ghido. Une fois la densité de probabilité estimée, une table de correspondance permet d'y associer une donnée d'identification initiale de transformée représentative d'une sous-liste prédéterminée. Par exemple, à une valeur de densité de probabilité donnée sera associée une transformée donnée.

Ces modes de réalisation apportent différents compromis précision d'identification de la transformée / complexité de calcul de l'identification.

Avantageusement, les tables permettant d'accéder à la ou les transformées des sous-listes sont fournies au décodeur dans une étape préalable.

Selon un autre mode de réalisation de l'invention, l'étape D5 de détermination de la donnée initiale de transformation DI ou sous-liste SL est mise en œuvre dynamiquement, de façon similaire à celle décrite précédemment pour le procédé de codage, à partir de scores préalablement associés à chaque transformée de la liste L de transformées disponibles à l'encodeur et au décodeur pour certaines valeurs de caractéristiques des données résiduelles du bloc. Ils sont stockés en mémoire du décodeur, par exemple dans une table associant un score à une transformée pour une valeur ou une plage de valeurs d'une ou plusieurs caractéristiques du signal résiduel du bloc à traiter.

Selon encore un autre mode de réalisation, l'étape D5 comprend en outre une insertion dans la sous-liste SL' d'un nombre prédéterminé NB-DT de transformées issues de blocs déjà traités. Il est alors procédé de façon analogue à celle de l'encodage, de telle sorte que la sous-liste SL' finale soit identique au décodeur et à l'encodeur.

Deux cas sont possibles à ce stade :
Selon un premier cas, les sous-listes déterminées en D5 ne comprennent chacune qu'un seul identifiant de transformée et le décodeur n'attend pas de signalisation complémentaire. Au cours d'une étape D7, il reconstruit l'identifiant de la transformée inverse à appliquer à partir de la seule information donnée par la donnée initiale DI déterminée en D5.

Selon un deuxième cas, le décodeur est configuré pour aller chercher une signalisation complémentaire de la transformée à appliquer dans le train binaire. Au cours d'une étape D6, il décode une donnée complémentaire DC à la donnée initiale DI déterminée.

La sous-liste SL déterminée peut comprend un ou plusieurs éléments.

Si elle comprend un seul élément, la donnée complémentaire DC indique si la prédiction de la transformée est correcte, c'est-à-dire s'il faut appliquer la transformée de la sous-liste déterminée au bloc courant.

Si la sous-liste de transformées pour le bloc courant comprend plusieurs éléments, le décodeur. connaît l'ordre et le nombre de transformées qu'elle comprend et la façon dont l'encodeur a signalé la donnée complémentaire dans le train binaire.

Il décode en D6 la donnée complémentaire DC lue dans le train binaire TB et détermine si elle comprend un index de position de la transformée à appliquer dans la sous-liste ou un code d'échappement destiné à indiquer que la transformée appliquée par l'encodeur n'appartient pas à la sous-liste déterminée.

Si la donnée complémentaire DC comprend un code d'échappement, elle comprend aussi un identifiant complet de la transformée appliquée, placé à la suite du code d'échappement.

Si l'identifiant initial de transformée DI n'est associé qu'à une seule valeur, alors la donnée complémentaire DC indique si le choix retenu par l'identifiant initial est correct,

Si l'identifiant initial de transformée comporte plusieurs valeurs, alors l'identifiant complémentaire indiquera, parmi les valeurs possibles, la transformée à utiliser. L'identifiant pourra indiquer si le choix retenu par l'encodeur ne fait pas partie des valeurs indiquées par l'identifiant de transformée initiale. A ce titre, l'identifiant complémentaire comportera un code binaire (codé sous forme entropique ou non) spécifiant l'indice de transformée sélectionnée par l'encodeur.

A titre d'exemple, on considère un identifiant initial de transformée comportant les valeurs (1,3,9) qui considère que les transformées (1,3,9) du mode de prédiction considéré sont vraisemblables. L'identifiant complémentaire, codé sur 2 bits, indiquera par la valeur '00' la transformation 1, par la valeur'01' la transformation 3 et par'10' la transformation 9. Si l'identifiant complémentaire porte la valeur '11' alors l'identifiant complémentaire sera complémenté par un code complémentaire qui spécifiera la transformée retenue, parmi celles provisionnées pour le mode de prédiction considéré, en excluant les trois pointées par l'identifiant initial.

En D8, les données du bloc courant C' sont déquantifiées.

En D9, on réalise une réorganisation des données du vecteur monodimensionnel résidu dans le bloc courant, selon un processus inverse au parcours du bloc courant décrit dans l'étape T5 de la Figure **4****.**

Dans une étape D10, on applique au données déquantifiées, la transformée correspondant à l'indice de transformée reconstruit en D6. Cette transformation correspond à la transformée inverse de celle réalisée à l'encodeur. On obtient alors un signal résiduel r' dans le domaine spatial.

Dans une étape D11, on reconstruit le bloc de pixels c' de l'image décodée à partir du bloc r' obtenu et on l'intègre à l'image ID en cours de décodage. Comme le bloc c'est un bloc résidu, on lui ajoute une prédiction PD' du bloc courant obtenue à partir d'une image de référence précédemment traitée.

Au cours d'une étape D12, on vient tester si le bloc courant est le dernier bloc à traiter le décodeur, compte tenu de l'ordre de parcours défini précédemment. Si oui, le procédé de décodage a terminé son traitement. Si non, l'étape suivante est l'étape de sélection du bloc suivant D13 et les étapes de décodage D1 à D12 précédemment décrites sont répétées pour le bloc suivant sélectionné.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

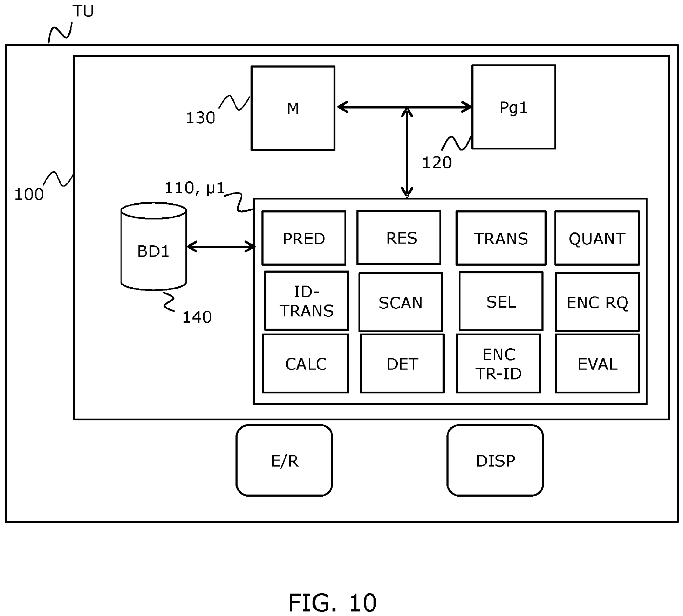

En relation avec la figure **10****,** on présente maintenant un exemple de structure matérielle simplifiée d'un dispositif 100 de codage d'une image numérique selon l'invention. Le dispositif 100 met en œuvre le procédé de codage selon l'invention qui vient d'être décrit dans ses différents modes de réalisation, en relation avec la Figure **4****.**

Par exemple, le dispositif 100 comprend une unité de traitement 110, équipée d'un processeur µ1, et pilotée par un programme d'ordinateur Pg1 120, stocké dans une mémoire 130 et mettant en œuvre le procédé de selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.

Dans cet exemple de réalisation de l'invention, le dispositif 100 comprend au moins une unité PRED du bloc courant, une unité RES d'obtention d'un résidu du bloc courant par soustraction de la prédiction au bloc courant.

Il comprend en outre une pluralité d'unités agencées pour être mises en œuvre plusieurs fois pour un même bloc, de façon à mettre en compétition la pluralité de transformées disponibles à l'encodeur. Il s'agit notamment d'une unité ID-TRANS d'identification d'une transformée à appliquer au bloc courant c à partir d'une liste L de transformées disponibles à l'encodeur et par exemple stockée sous forme d'une table dans une mémoire, par exemple la mémoire 130, d'une unité TRANS de transformation fréquentielle d'un bloc courant en un bloc transformé C à l'aide de la transformée identifiée, d'une unité QUANT de quantification du bloc transformé, d'une unité SCAN de parcours dans un ordre prédéterminé de façon à constituer un vecteur monodimensionnel RQ'[j], d'une unité ENC RQ de codage du vecteur monodimensionnel quantifié et d'une unité EVAL d'évaluation de la transformée Tri appliquée selon un critère débit-distorsion. Le dispositif de codage selon l'invention comprend en outre une unité SEL de sélection de la meilleure transformée à partir des résultats obtenus par l'unité EVAL pour les transformées évaluées. Les données codées à partir de la transformée sélectionnée sont ensuite insérées dans le train binaire TB.

Selon l'invention, le dispositif comprend en outre une unité CALC de calcul d'au moins une caractéristique du signal résidu du bloc courant, une unité DET de détermination d'une onnée initiale d'identification d'une sous-liste de transformées associées à la au moins une caractéristique calculée et une unité de vérification de l'appartenance de la transformée appliquée à la sous liste déterminée. Optionnellement, le dispositif comprend une unité ENC TR-ID d'encodage de l'identifiant de la transformée sélectionnée comprenant le codage d'une donnée complémentaire de la donnée initiale d'identification. Cette unité est agencée pour être mise en œuvre, si nécessaire, au moins en fonction de l'appartenance de la transformée appliquée à la sous-liste de transformées déterminée. Par exemple, la donnée initiale d'identification de transformées comprenant une sous-liste SL de transformées est stockée sous forme d'une table dans une mémoire, par exemple la mémoire 130, ou un lien vers cette sous-liste.

Ces unités sont pilotées par le processeur µ1 de l'unité de traitement 110.

De façon avantageuse, le dispositif 100 peut être intégré à un terminal d'utilisateur TU. Le dispositif 100 est alors agencé pour coopérer au moins avec un module E/R d'émission/réception de données du terminal TU, par l'intermédiaire duquel le train binaire TB ou le fichier compressé FC est transmis via un réseau de télécommunications à un dispositif de décodage;

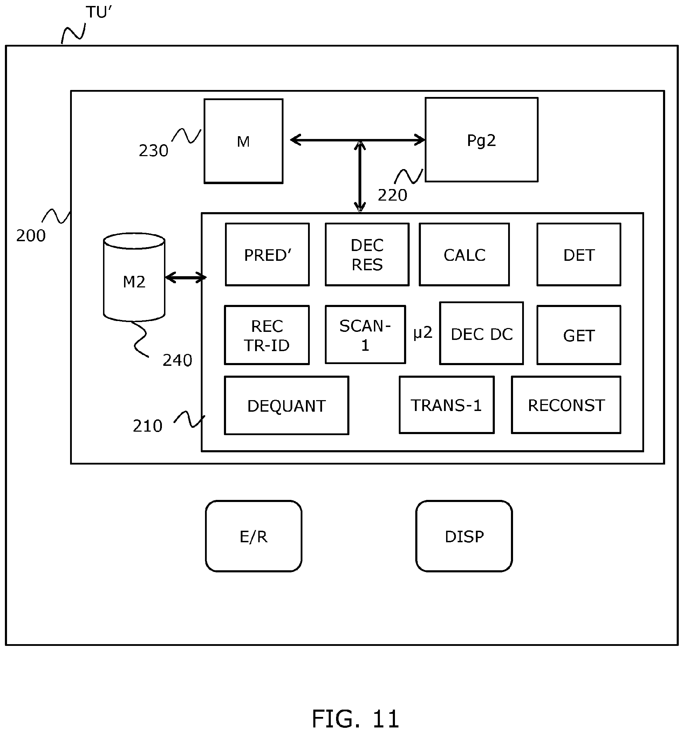

En relation avec la Figure **11****,** on présente un exemple de structure matérielle simplifiée d'un dispositif de décodage selon l'invention. Par exemple, le dispositif de décodage 200 comprend une unité de traitement 210, équipée d'un processeur µ2, et pilotée par un programme d'ordinateur Pg2 220, stocké dans une mémoire 230 et mettant en oeuvre le procédé de décodage selon l'invention, qui vient d'être décrit dans ses différents modes de réalisation, en relation avec la Figure **9****.**

A l'initialisation, les instructions de code du programme d'ordinateur Pg2 220 sont par exemple chargées dans une mémoire RAM avant d'être exécutées par le processeur de l'unité de traitement 210. Le processeur de l'unité de traitement 210 met en oeuvre les étapes du procédé décrit précédemment, selon les instructions du programme d'ordinateur 220.

Dans cet exemple de réalisation de l'invention, le dispositif 200 comprend au moins une unité GET de lecture de données codées dans le train binaire pour le bloc courant, comprenant les paramètres de codage et les valeurs des coefficients résidus quantifiés, une unité DEC RES de décodage des coefficients du bloc courant transformé quantifié à partir des données obtenues, une unité DEQUANT de déquantification des coefficients décodés, une unité SCAN-1 de réorganisation des données du vecteur monodimensionnel résidu dans le bloc courant, une unité TRANS-1 de transformation inverse du bloc résidu courant transformé, une unité RECONST de reconstruction du bloc courant à partir du résidu et de la prédiction du bloc .

Avantageusement, le dispositif comprend une unité CALC de calcul d'au moins une caractéristique du signal résidu quantifié du bloc courant et une unité DET de détermination d'une donnée initiale d'identification d'une sous-liste d'au moins une transformée DI associée à la dite au moins une caractéristique calculée. Par exemple, une donnée initiale d'identification de transformées comprend une sous-liste SL de transformées. qui est stockée sous forme d'une table dans une mémoire, par exemple la mémoire 230, ou bien elle comprend un lien vers une mémoire cette sous-liste.

Ces deux unités sont similaires à celle d'un dispositif d'encodage selon l'invention. Le dispositif 200 de décodage selon l'invention comprend en outre une unité REC TR-ID de reconstruction d'un identifiant de la transformée appliquée au bloc courant, au moins à partir de la donnée initiale DI. Selon un mode de réalisation de l'invention, le dispositif 200 comprend en outre une unité DEC DC de décodage d'une donnée complémentaire DC lue dans le train binaire. Cette donnée complémentaire est exploitée par l'unité de reconstruction REC TR-ID pour déterminer l'identifiant de la transformée inverse à appliquer au bloc courant à partir de la connaissance de la sous-liste de transformées, comme précédemment décrit en relation avec la Figure **9****.**

Ces unités sont pilotées par le processeur µ2 de l'unité de traitement 210.

De façon avantageuse, le dispositif 200 peut être intégré à un terminal d'utilisateur TU'. Le dispositif 200 est alors agencé pour coopérer au moins avec le module suivant du terminal TU' :
- Un module E/R d'émission/réception de données, par l'intermédiaire duquel le train binaire TB ou le fichier compressé FC est reçu d'un réseau de télécommunications ;
- Un dispositif DISP de restitution d'images, par exemple un écran de terminal, par l'intermédiaire duquel l'image numérique décodée ou la suite d'images décodées est restituée à un utilisateur.

De façon avantageuse, un terminal d'utilisateur TU, TU' peut intégrer à la fois un dispositif 100 de codage et un dispositif 200 de décodage selon l'invention.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de décodage d'une image numérique à partir d'un train binaire comprenant des données codées représentatives de ladite image, ladite image (Iₖ) étant divisée en une pluralité de blocs traités dans un ordre défini, ledit procédé comprenant les étapes suivantes, mises en œuvre pour un bloc (C'), dit bloc courant :
- prédiction (D2) du bloc courant à partir d'au moins un bloc précédemment traité;
- décodage (D3) des valeurs codées des coefficients du bloc résidu transformé extraites du train binaire (TB);
- obtention (D9) d'un bloc résidu par application au bloc résidu transformé d'une transformée identifiée parmi une liste prédéterminée de transformées;
- reconstruction (D10) du bloc décodé à partir du bloc résidu et de la prédiction du bloc courant;
ledit procédé étant **caractérisé en ce qu'**il comprend une étape (D4) de calcul d'au moins une caractéristique représentative d'au moins un coefficient résidu transformé du bloc courant, une étape (D5) de détermination d'une donnée initiale d'identification représentative d'une sous-liste d'au moins une transformée associée à ladite au moins une caractéristique calculée et une étape (D10) de reconstruction d'un identifiant de la transformée à appliquer au bloc résidu transformé au moins à partir de la donnée initiale déterminée.

2. Procédé de décodage selon la revendication 1, dans lequel ladite au moins une caractéristique représentative d'au moins un coefficient résidu transformé est une position du dernier coefficient résidu quantifié significatif.

3. Procédé de décodage selon la revendication 1, dans lequel ladite au moins une caractéristique représentative d'au moins un coefficient résidu transformé est la position du dernier coefficient non-nul des données quantifiées du bloc courant.

4. Procédé de décodage selon la revendication 1, dans lequel ladite au moins une caractéristique représentative d'au moins un coefficient résidu transformé est une liste des positions des coefficients résidus significatifs.

5. Procédé de décodage selon la revendication 1, dans lequel ladite au moins une caractéristique représentative d'au moins un coefficient résidu transformé est une valeur représentative d'une évolution des carrés des coefficients résidus quantifiés.

6. Procédé de décodage selon la revendication 1, dans lequel ladite au moins une caractéristique représentative d'au moins un coefficient résidu transformé est une somme des valeurs absolues des coefficients résidus quantifiés.

7. Procédé de décodage selon la revendication 1, dans lequel ladite au moins une caractéristique représentative d'au moins un coefficient résidu transformé est une somme des carrés des coefficients résidus quantifiés.

8. Dispositif (200) de décodage d'une image numérique à partir d'un train binaire comprenant des données codées représentatives de ladite image, ladite image étant divisée en une pluralité de blocs traités dans un ordre défini, ledit dispositif comprenant les unités suivantes, mises en œuvre pour un bloc, dit bloc courant :
- prédiction (PRED') du bloc courant à partir d'au moins un bloc précédemment traité;
- décodage (DEC RES) des valeurs codées des coefficients du bloc résidu transformé extraites du train binaire (TB);
- obtention (TRANS-1) d'un bloc résidu par application au bloc résidu transformé d'une transformée, ladite transformée appartenant à une liste de transformées prédéterminées ;
- reconstruction (RECONST) du bloc décodé à partir du bloc résidu et de la prédiction du bloc courant;
ledit dispositif étant **caractérisé en ce qu'**il comprend une unité (CALC) de calcul d'au moins une caractéristique représentative d'au moins un coefficient résidu transformé du bloc courant, une unité (DET) de détermination d'une donnée initiale d'identification de transformées associée à ladite au moins une caractéristique calculée, et une unité (REC TR-ID) de reconstruction d'un identifiant de la transformée à appliquer au bloc résidu transformé au moins à partir de la donnée initiale déterminée.

9. Dispositif de décodage selon la revendication 8, dans lequel ladite au moins une caractéristique représentative d'au moins un coefficient résidu transformé est une position du dernier coefficient résidu quantifié significatif.

10. Dispositif de décodage selon la revendication 8, dans lequel ladite au moins une caractéristique représentative d'au moins un coefficient résidu transformé est la position du dernier coefficient non-nul des données quantifiées du bloc courant.

11. Dispositif de décodage selon la revendication 8, dans lequel ladite au moins une caractéristique représentative d'au moins un coefficient résidu transformé appartient au groupe comprenant au moins :
- une liste des positions des coefficients résidus significatifs ;
- une somme des carrés des coefficients résidus quantifiés ;
- une somme des valeurs absolues des coefficients résidus quantifiés ;
- une valeur représentative d'une évolution des carrés des coefficients résidus quantifiés.

12. Signal portant un train binaire comprenant des données codées représentatives d'une image numérique, ladite image numérique étant divisée en blocs de pixels traités dans un ordre défini, les valeurs d'un bloc courant étant prédites à partir des valeurs d'au moins un bloc précédemment traité selon un mode de prédiction choisi parmi une pluralité de modes prédéterminés, les valeurs d'un bloc résidu étant calculées par soustraction des valeurs prédites aux valeurs originales du bloc courant, un bloc résidu transformé étant obtenu par application d'une transformée à des pixels du bloc résidu, ledit bloc résidu transformé comprenant des coefficients, la transformée appartenant à une liste de transformées prédéterminée ;
**caractérisé en ce que**, pour un bloc courant, ledit signal comprend une donnée codée complémentaire (DC), ladite donnée codée complémentaire étant destinée à être exploitée pour reconstruire un identifiant de la transformée inverse à appliquer aux valeurs d'un bloc résidu courant, à partir d'une donnée initiale d'identification transformée, ladite donnée initiale étant représentative d'une sous-liste d'au moins une transformée de ladite liste et associée à au moins une caractéristique d'au moins une valeur du bloc résidu transformé courant.

13. Terminal d'utilisateur (TU) **caractérisé en ce qu'**il comprend un dispositif de décodage d'une image numérique selon l'une des revendications **8 à 11.**

14. Programme d'ordinateur comprenant des instructions pour la mise en œuvre du procédé de décodage d'une image numérique selon l'une des revendications **1 à 7,** lorsqu'il est exécuté par un processeur.
